# FASCICULE DE BREVET EUROPEEN

(11) **EP 0 453 353 B1**
(45) Date de publication et mention de la délivrance du brevet: **09.03.1994**
(21) Numéro de dépôt: 91400958.4
(22) Date de dépôt: 10.04.1991
(51) Int. Cl.: B64G 1/62

(54) **Dispositif de freinage aérodynamique**
Luftbremsenvorrichtung
Airbrake device

(30) Priorité: 13.04.1990 FR 9004807
(43) Date de publication de la demande: 23.10.1991
(73) Titulaire: DASSAULT-AVIATION, F-75008 Paris (FR)
(72) Inventeur: Chaumette, Daniel, F-92150 Suresnes (FR); Puech, Jean-François, F-78124 Mareil sur Mauldre (FR)
(74) Mandataire: Colas, Jean-Pierre

(56) Documents cités:
- DE-A- 3 830 650
- US-A- 4 832 288
- JOURNAL OF SPACECRAFT AND ROCKETS, vol. 4, no. 6, juin 1967, pages 720-725; J.A. ALAI: "Tension string structure for planetary entry vehicles"

## Description

La présente invention est relative à un dispositif de freinage aérodynamique, destiné notamment à la décélération d'un objet spatial pénétrant à grande vitesse dans une atmosphère.

La conception d'un dispositif pour la décélération d'un objet spatial, tel qu'une sonde de mesure, qui pénètre à grande vitesse dans une atmosphère, par exemple d'une planète, doit tenir compte d'un nombre important de contraintes. Le dispositif doit être de poids aussi réduit que possible, il doit présenter une forme géométrique stable et n'être pas sujet à des phénomènes de flottement ou d'oscillations, incontrôlables. Il doit être robuste, pouvoir supporter un stockage prolongé à des températures très basses et dans le vide intersidéral, et pouvoir également supporter, pendant le temps prévu pour la pénétration dans l'atmosphère considérée, les contraintes mécaniques et thermiques résultant de cette pénétration.

On doit cependant observer que l'invention doit, si possible, être applicable, au moins dans son principe, à des appareillages qui sont destinés à répondre à des exigences moins dures que celles qui résultent de ces conditions extrêmes.

On a proposé, dans le brevet US-A-4.832.288, un dispositif de freinage constitué d'un anneau tronconique en toile maintenu, dans sa partie de plus grand diamètre, par une charpente gonflable. Cette solution présente l'inconvénient que la toile, au contact d'un écoulement aérodynamique, présente des phénomènes qu'on appelle de flottement, par analogie avec le comportement d'un drapeau placé dans le vent, c'est-à-dire des phénomènes ondulatoires qui peuvent atteindre une grande ampleur, et devenir pratiquement incontrôlables. Un moyen, connu en général, de supprimer de tels phénomènes serait de maintenir la toile sous une forte tension biaxiale, mais cela n'est pas suggéré dans le document cité. Au contraire, il apparaît que le flottement est encore accentué ici par le manque de rigidité de la charpente gonflable.

Il a été décrit, dans "Journal of Spacecraft and Rockets, vol. 4, n° 6, juin 1967, pages 720-725, un dispositif de freinage dont le constituant essentiel est un ensemble de fils tendus, maintenus par un anneau équatorial et des anneaux avant et arrière, portés par un support central tubulaire, placé à l'intérieur de l'anneau équatorial, et coaxial à lui. Les fils sont mis en place par bobinage, obliquement par rapport à l'axe de l'anneau, si bien qu'ils forment deux surfaces opposées par leur base et à peu près tronconiques, plus exactement chacune en forme d'hyperboloïde de révolution à concavité tournée à l'opposé de l'axe. Les fils sont collés sur l'anneau, et, de préférence, enrobés de matière élastomère.

Il est prévu deux bobinages superposés, les fils d'un bobinage faisant un angle avec l'axe qui est de sens opposé à celui de l'autre bobinage, et il est possible d'obtenir un entrecroisement des fils en changeant le sens d'enroulement. Les fils sont liés à l'anneau planétaire, et peuvent être solidarisés entre eux par un revêtement de matière élastomère.

Ce dispositif a pour particularité qu'un point de la surface de l'ensemble de fils tendus, la résistance à une déformation est maximale dans les directions des fils tendus qui se croisent en ce point, et minimale dans les directions axiale et équatoriale, qui sont celles où les efforts dus à l'action de l'atmosphère sont les plus importants. Une bonne résistance au phénomène de flottement ne peut donc être obtenue que par des tensions très importantes des fil, ce qui impose un supplément de poids non désiré. D'autre part, l'anneau équatorial n'est maintenu que par la tension des fils, et seule une très forte tension des fils des deux nappes pourrait empêcher des déplacements oscillatoires de cet anneau, soit par translation dans une direction axiale, dans une direction radiale, soit par pivotement autour d'axes diamétraux. Ainsi, le dispositif décrit présente une tendance marquée à l'instabilité aérodynamique, à moins d'une tension très forte des fils, ce qui imposerait un surcroît de poids inacceptable. En outre, l'une des surfaces à peu près tronconiques est inutile et gêne l'accès à l'espace situé en arrière de la surface qui sert au freinage.

La présente invention a pour but de fournir un dispositif de freinage qui soit d'une légèreté comparable à celle des dispositifs connus, tout en présentant une résistance bien supérieure aux phénomènes de flottement.

L'invention fournit en conséquence un dispositif de freinage aérodynamique, destiné notamment à la décélération d'un objet spatial pénétrant à grande vitesse dans une atmosphère, constitué d'un anneau de toile de forme à peu près tronconique et d'une structure de soutien conçue pour maintenir sous tension ledit anneau de toile, caractérisé en ce que la toile est disposée avec des fils dans une direction à peu près axiale et des fils dans une direction à peu près équatoriale, en ce que ledit anneau de toile présente une concavité dirigée radialement du côté opposé à l'axe, et en ce que la structure de soutien comprend au moins deux anneaux rigides, agissant sur les parties de plus grand et de plus petit diamètres de l'anneau de toile et reliés entre eux par des entretoises rigides qui exercent sur lesdits anneaux rigides une force axiale tendant à les écarter, si bien que, du fait de la concavité de l'anneau de toile, ladite toile est soumise, entre lesdits anneaux rigides, à une tension bi-axiale selon les directions axiale et équatoriale.

On comprend que la contrainte exercée sur l'anneau de toile tend à réduire sa concavité pour rapprocher sa forme de celle d'un tronc de cône, par augmentation du diamètre des cercles équatoriaux, et que les fils, par leur disposition, résistent à cette tendance pour former un ensemble fortement tendu.

D'autre part, la présence des entretoises rigides confère à la structure de soutien une rigidité d'ensemble qui s'oppose à tout déplacement oscillatoire relatif des anneaux. On aboutit donc à un ensemble à la fois rigide et de grande légèreté.

Avantageusement, les bords de l'anneau de toile sont pourvus de ralingues qui sont retenues chacune dans une gorge de l'anneau rigide correspondant placée de telle façon que la face intérieure de l'anneau de toile est en appui sur l'anneau rigide. Dans une disposition préférée, la gorge de l'anneau rigide le plus grand est portée par une pièce indépendante du reste de l'anneau, et capable de coulisser sur lui le long d'une surface cylindrique parallèle à l'axe du dispositif.

Dans tous les cas, par souci de sécurité, on prévoit que les ralingues sont maintenues dans leur gorge par des pièces de blocage annulaires.

Les modalités préférées qui vont suivre sont plus spécialement relatives à un dispositif selon l'invention et qui, lors de l'usage, est soumis à des températures élevées.

Avantageusement, la forme et la disposition des entretoises sont calculées pour que, lors de l'utilisation, la toile ne vienne pas en contact avec lesdites entretoises. Ceci peut être obtenu avec des entretoises curvilignes, ou excentrées par rapport aux anneaux rigides, ou simplement de petite section par rapport à celle des anneaux rigides. Un contact de la toile, rendue très chaude par le frottement de l'atmosphère, occasionnerait un échauffement local mal contrôlé de l'entretoise, qui pourrait se déformer et/ou perdre une partie de ses propriétés mécaniques.

Avantageusement aussi, le coefficient de dilatation de la toile est inférieur à celui de la matière des anneaux rigides et des entretoises, et la tension de la toile est calculée pour que, lors de l'utilisation, l'échauffement et les différences de dilatation engendrent une augmentation de la tension de la toile qui amène cette tension à la valeur désirée.

Avantageusement encore, la matière de la toile et celle des anneaux rigides et des entretoises sont choisies pour que la toile puisse supporter des températures élevées et que les anneaux rigides et les entretoises diffusent rapidement la chaleur depuis les points de contact de la toile avec les anneaux rigides afin d'éviter un échauffement local des anneaux au voisinage de ces points de contact.

L'invention va maintenant être exposée de façon plus détaillée à l'aide d'un exemple pratique illustré avec les dessins parmi lesquels :
- Figure 1 est une demi-vue en perspective de l'ensemble d'un dispositif de freinage aérodynamique conforme à l'invention,
- figure 2 est une vue de côté de l'anneau de toile,
- figure 3 est une coupe partielle du dispositif selon un plan axial,
- figure 4 est une vue analogue à la figure 3, mais montrant à plus grande échelle, les régions d'extrémités d'une entretoise.

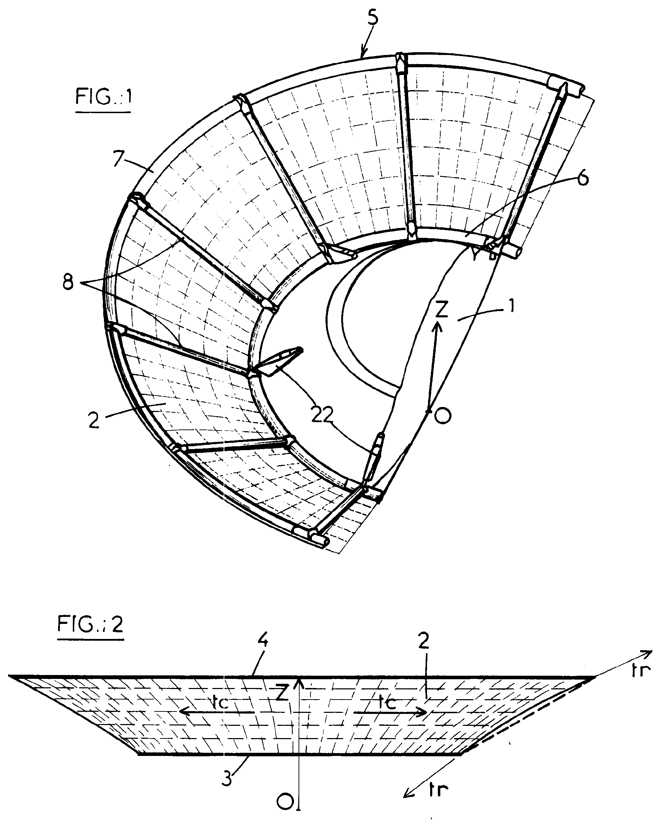

La figure 1 montre un dispositif de freinage destiné à être utilisé lors de la pénétration dans une atmosphère d'un corps central 1, qui est représenté de façon symbolique, qui peut être un ensemble d'instruments de mesure portés par un support, les instruments de mesure et le support occupant un volume à peu près de révolution dont seul le contour extérieur a été dessiné.

Le dispositif se compose essentiellement d'un anneau de toile, de forme générale à peu près tronconique, bordé sur son bord intérieur, c'est-à-dire celui qui est du plus petit diamètre par une ralingue 3, et sur son bord opposé par une autre ralingue 4. Par ralingue on désigne ici une partie du tissu qui est repliée et cousue sur elle-même, en entourant un câble circulaire de résistance à la traction convenable.

La toile 2, dans l'exemple décrit, est en tissu de carbone, dont la texture et la taille du fil ont été choisies pour assurer la résistance aérodynamique et mécanique convenable, ainsi que la tenue aux températures d'utilisation, qui peuvent atteindre 1500°C environ. Des toiles convenables sont commercialisées en France par la Société BROCHIER.

La toile peut être constituée de plusieurs panneaux plans réunis par des coutures parallèles aux entretoises, mais la solution préférée est l'utilisation d'un anneau de toile d'une seule pièce, tissé en forme, sans couture en dehors des zones des ralingues. L'avantage de cette disposition est de ne pas avoir de couture dans les zones les plus chaudes, c'est-à-dire les zones écartées des anneaux rigides. Les coutures des ralingues sont en effet refroidies par l'effet de "puits thermique" des anneaux.

Un autre avantage de l'anneau de toile tissé en forme est qu'il a des fils de trame exactement dans des plans parallèles à l'axe, et des fils de chaîne dans des plans perpendiculaires à l'axe. Avec un anneau de toile constitué de plusieurs panneaux cousus, ce résultat n'est obtenu que de façon approchée, d'où une plus grande déformabilité de l'anneau de toile sous les contraintes aérodynamiques.

La forme de l'anneau de toile 2 n'est pas exactement tronconique. En effet, le diamètre des sections radiales qui sont intermédiaires entre les sections extrêmes, correspondant aux ralingues 3 et 4, est inférieur à ce qu'il serait si l'anneau était exactement tronconique. L'écart augmente progressivement à partir des extrémités jusque vers la région située à mi-distance entre les extrémités, où il est d'environ 5 % par rapport à la valeur théorique qui correspondrait à un tronc de cône parfait. Cela est clairement visible à la figure 2, sur laquelle on a représenté la forme de l'anneau 2, et en tirets, la forme qui correspondrait à une surface parfaitement tronconique.

L'anneau de toile 2 est tendu sur une structure désignée dans son ensemble par 5, et qui comprend un anneau rigide intérieur 6, un anneau rigide extérieur 7, et des entretoises 8 reliant ces deux anneaux.

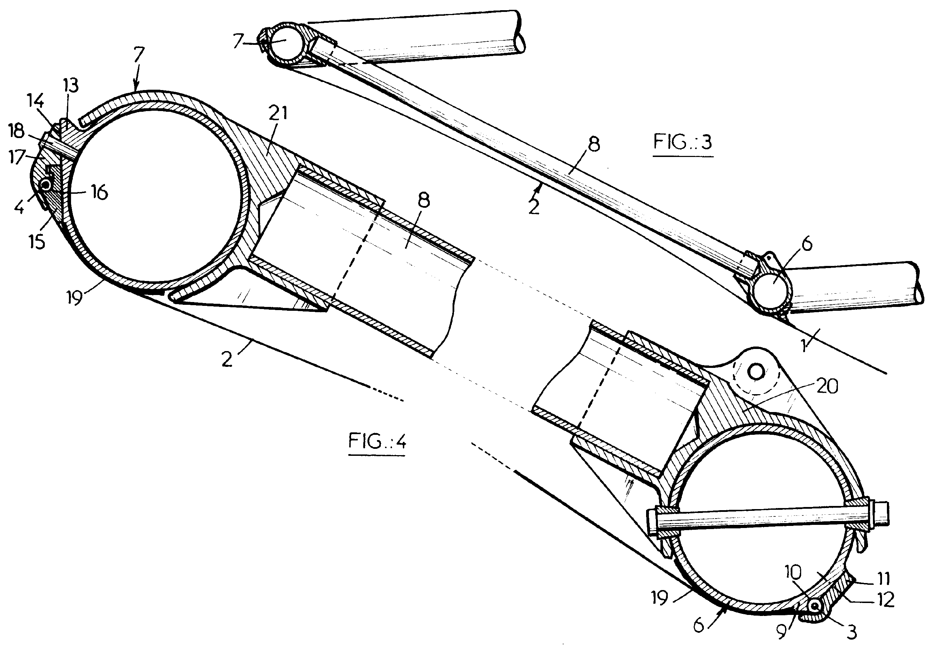

Comme le montre clairement la figure 4, l'anneau intérieur 6 est un anneau tubulaire, dont la section transversale est à peu près circulaire, mais qui comporte une partie plus épaisse 9, dans laquelle est creusée une gorge 10 de forme et dimension appropriées à recevoir la ralingue correspondante 3. Une pièce de maintien 11 est disposée pour maintenir en place la ralingue 3. La pièce 11 est fixée sur l'anneau tubulaire 6 par des rivets 12. L'anneau extérieur 7 est, lui aussi constitué par une pièce tubulaire, à section sensiblement circulaire, mais avec une surépaisseur 13 présentant une face externe 14 qui constitue une surface cylindrique d'axe parallèle à l'axe OZ de l'ensemble du dispositif. Sur cette surface cylindrique peut glisser une pièce d'appui 15, qui porte une gorge 16 destinée à recevoir la ralingue extérieure 4. Une pièce de maintien 17 empêche la ralingue 4 de s'échapper une fois qu'elle est en place.

On comprend aisément le mode de montage de la toile sur la structure rigide, compte tenu de ce qui précède : on commence par immobiliser la ralingue intérieure 3 entre la rainure 10 et la pièce de maintien 11, puis on place la ralingue extérieure 4 entre les pièces 15 et 17, et on fait coulisser ces pièces parallèlement à l'axe, le long de la surface cylindrique 14. On obtient ainsi une mise en tension symétrique et régulière de la toile 2, qui vient se tendre en s'appuyant sur la paroi des anneaux rigides 6 et 7. Cette tension est représentée par les flèches tr à la figure 2. Lorsque la tension convenable est obtenue, on immobilise les pièces 15 et 17 par des rivets 18, qui pénètrent dans l'anneau rigide 6.

On comprendra que la tension radiale tr engendre, à cause de la forme non conique de l'anneau de toile 2, une tension tc de la toile dans la direction tangentielle dans un plan perpendiculaire à l'axe.

L'existence d'un état de tension biaxiale a pour résultat une bonne stabilité sous l'effet des écoulements aérodynamiques, et minimise ainsi les effets de flottement.

Une couche de matière d'isolation thermique 19 est prévue entre la toile 2 et l'anneau rigide 6 et entre la toile 2 et l'anneau rigide 7. Dans la pratique, il s'agit de silice poreuse.

Les entretoises 8 sont des pièces tubulaires, fixées à leurs extrémités sur les anneaux rigides 6 et 7 au moyen de ferrures 20, 21. On notera, comme cela est clairement visible aux figures 3 et 4, que les entretoises 8 sont excentrées par rapport aux anneaux tubulaires 6 et 7, et décalées du côté opposé à la toile. La figure 3 montre la raison de cette disposition : la toile 2, malgré le fait qu'elle présente une concavité vers l'extérieur, ne doit pas venir en contact avec les entretoises. L'écart entre l'axe d'une entretoise 8 et le centre de la section transversale des anneaux rigides 6 et 7 doit être calculé pour éviter ce contact, compte tenu de la forme de la toile, de son état de tension, et des contraintes aérodynamiques qu'elle subit.

La figure 1 montre que l'anneau inférieur 6 est lié au corps central 1 par des ferrures de liaison 22. Celles-ci prennent appui sur les ferrures 20 de liaison des entretoises avec l'anneau inférieur. La figure 1 montre que le nombre de ces ferrures de liaison est égal à la moitié du nombre d'entretoises. Il est évident que le nombre des ferrures de liaison peut être changé sans sortir de l'invention.

Selon la réalisation décrite, les anneaux rigides, les entretoises et les différentes pièces auxiliaires sont en béryllium. Le béryllium présente l'avantage d'une grande légèreté, d'une bonne tenue à des températures élevées, et surtout d'une très bonne diffusivité, c'est-à-dire que la chaleur qu'il reçoit en un point de son volume est largement diffusé à l'ensemble de la pièce, évitant ainsi tout échauffement local, qui pourrait nuire à la tenue du dispositif. Rappelons que la diffusité correspond à la conductivité thermique divisée par la capacité calorifique et par la masse volumique. En outre, le coefficient de dilatation du béryllium est de l'ordre de 16 fois supérieur à celui du matériau retenu pour la toile 2, c'est-à-dire le carbone. Pour cette raison, lors de l'entrée dans une atmosphère, l'échauffement de la structure support a pour conséquence une augmentation appréciable de la tension de la toile 2. D'une part celle-ci est rendue ainsi moins sensible aux risques de phénomènes aérodynamiques de flottement, d'autre part elle tend à s'écarter des entretoises.

Aux basses températures, au contraire, les tensions se réduisent, toujours par l'effet de la différence des coefficients de dilatation ce qui réduit les risques de fluage lors d'un stockage de longue durée.

La géométrie du dispositif, les matériaux utilisés, le nombre d'entretoises, la nature des matériaux, la dimension des mailles de la toile etc... sont à choisir chaque fois en fonction du problème considéré. On peut également envisager des structures pliables avant l'emploi. Il est également possible de concevoir des dispositifs plus complexes, où un anneau de toile présente plusieurs concavités successives vers l'extérieur dans le sens axial et tendu sur plusieurs anneaux rigides successifs.

## Revendications

1. Dispositif de freinage aérodynamique, destiné notamment à la décélération d'un objet spatial pénétrant à grande vitesse dans une atmosphère, constitué d'un anneau de toile de forme à peu près tronconique et d'une structure de soutien conçue pour maintenir sous tension ledit anneau de toile,
caractérisé en ce que la toile (2) est disposée avec des fils dans une direction à peu près axiale et des fils dans une direction à peu près équatoriale, en ce que ledit anneau de toile présente une concavité dirigée radialement du côté opposé à l'axe, et en ce que la structure de soutien comprend au moins deux anneaux rigides (6, 7), agissant sur les parties de plus grand et de plus petit diamètres de l'anneau de toile et reliés entre eux par des entretoises rigides (8) qui exercent sur lesdits anneaux rigides une force axiale tendant à les écarter, si bien que, du fait de la concavité de l'anneau de toile, ladite toile est soumise, entre lesdits anneaux rigides, à une tension bi-axiale selon les directions axiale et équatoriale.

2. Dispositif selon la revendication 1, caractérisé en ce que les bords de l'anneau de toile sont pourvus de ralingues (3, 4) qui sont retenues chacune dans une gorge (10, 16) de l'anneau rigide correspondant placée de telle façon que la face intérieure de l'anneau de toile est en appui sur l'anneau rigide.

3. Dispositif selon la revendication 2, caractérisé en ce que des cales isolantes (19) sont intercalées chaque fois entre la face intérieure de la toile et l'anneau rigide (6, 7) adjacent.

4. Dispositif selon la revendication 2 ou 3, caractérisé en ce que la gorge de l'anneau rigide le plus grand est portée par une pièce (15) indépendante du reste de l'anneau, et capable de coulisser sur lui le long d'une surface cylindrique (14) parallèle à l'axe du dispositif.

5. Dispositif selon l'une des revendications 2 à 4, caractérisé en ce que les ralingues (3, 4) sont maintenues dans leur gorge par des pièces de blocage annulaires (11, 17).

6. Dispositif selon l'une des revendications 1 à 5, caractérisé en ce que la forme et la disposition des entretoises (8) sont calculées pour que, lors de l'utilisation, la toile ne vienne pas en contact avec lesdites entretoises.

7. Dispositif selon l'une des revendications 1 à 6, caractérisé en ce que le coefficient de dilatation de la toile est inférieur à celui de la matière des anneaux rigides et des entretoises, et la tension de la toile est calculée pour que, lors de l'utilisation, les différences de dilatation engendrent une augmentation de la tension de la toile qui amène cette tension à la valeur désirée.

8. Dispositif selon l'une des revendications 1 à 7, caractérisé en ce que l'anneau de toile est tissé en une seule pièce.

9. Dispositif selon l'une des revendications 1 à 8, caractérisé en ce que la matière de la toile et celle des anneaux rigides et des entretoises sont choisies pour que la toile puisse supporter des températures élevées et que les anneaux rigides et les entretoises diffusent rapidement la chaleur depuis les points de contact de la toile avec les anneaux rigides afin d'éviter un échauffement local des anneaux au voisinage de ces points de contact.

10. Dispositif selon la revendication 9, caractérisé en ce que la toile est en un tissu de carbone.

11. Dispositif selon la revendication 9 ou 10, caractérisé en ce que les anneaux rigides et les entretoises sont en béryllium.

## Patentansprüche

1. Luftbremsenvorrichtung, bestimmt zum Verzögern eines Raumobjektes, welches mit großer Geschwindigkeit in eine Atmosphäre eintritt, gebildet von einem Gewebering mit ungefähr kegelstumpfartiger Form und einer Haltestruktur entworfen zum Halten des Geweberinges unter Spannung, dadurch gekennzeichnet, daß das Gewebe (2) mit Fäden in einer ungefähr axialen Richtung und Fäden in einer ungefähr äquatorialen Richtung angeordnet ist, und daß der Gewebering eine Konkavität zeigt, die radial auf die Seite gegenüber der Achse gerichtet ist, und daß die Haltestruktur zumindest zwei starre Ringe (6, 7) aufweist, die auf die Teile von größeren und kleineren Durchmessern des Geweberinges wirken und untereinander mittels starrer Verstrebungen (8) verbunden sind, die auf die starren Ringe eine Axialkraft ausüben, die sie auseinanderzuspreizen sucht, so daß aufgrund der Konkavität des Geweberinges das Gewebe zwischen den starren Ringen einer biaxialen Spannung entlang der axialen und der äquatorialen Richtung unterworfen ist.

2. Vorrichtung gemäß Anspruch 1, dadurch gekennzeichnet, daß die Ränder des Geweberinges mit Gurten (3, 4) versehen sind, die jeder in einer entsprechenden Nut des starren Ringes zurückgehalten sind, die so plaziert ist, daß die Innenseite des Geweberinges in Anlage auf dem starren Ring ist.

3. Vorrichtung gemäß Anspruch 2, dadurch gekennzeichnet, daß isolierende Unterlagen (19) jedesmal zwischen der Innenseite des Gewebes und dem benachbarten starren Ring (6, 7) angeordnet sind.

4. Vorrichtung gemäß Anspruch 2 oder 3, dadurch gekennzeichnet, daß die Nut des größten starren Ringes von einem Stück (15) getragen ist, welches unabhängig vom Rest des Ringes ist, und in der Lage ist, auf diesem entlang einer zylindrischen Oberfläche (14) parallel zur Achse der Vorrichtung zu gleiten.

5. Vorrichtung gemäß einem der Ansprüche 2 bis 4, dadurch gekennzeichnet, daß die Gurte (3, 4) in ihrer Nut durch ringförmige Blockierstücke (11, 17) gehalten sind.

6. Vorrichtung gemäß einem der Ansprüche 1 bis 5, dadurch gekennzeichnet, daß die Form und die Anordnung der Verstrebungen (8) berechnet sind, so daß das Gewebe während des Gebrauchs nicht in Berührung mit den Verstrebungen gelangt.

7. Vorrichtung gemäß einem der Ansprüche 1 bis 6, dadurch gekennzeichnet, daß der Ausdehnungskoeffizient des Gewebes geringer als derjenige des Materials der starren Ringe und der Verstrebungen ist, und die Spannung des Gewebes berechnet ist, so daß während des Gebrauchs die Unterschiede der Ausdehnungen eine Verstärkung der Spannung des Gewebes erzeugen, die diese Spannung zu dem gewünschten Wert führt.

8. Vorrichtung gemäß einem der Ansprüche 1 bis 7, dadurch gekennzeichnet, daß der Gewebering in einem einzigen Stück gewebt ist.

9. Vorrichtung gemäß einem der Ansprüche 1 bis 8, dadurch gekennzeichnet, daß das Material des Gewebes und das der starren Ringe und der Verstrebungen gewählt ist, damit das Gewebe erhöhte Temperaturen ertragen und die starren Ringe und die Verstrebungen schnell die Wärme von den Kontaktpunkten des Gewebes mit den starren Ringen verbreiten, um eine lokale Aufheizung der Ringe in der Nachbarschaft dieser Kontaktpunkte zu vermeiden.

10. Vorrichtung gemäß Anspruch 9, dadurch gekennzeichnet, daß das Gewebe ein Kohlenstoffgewebe ist.

11. Vorrichtung gemäß Anspruch 9 oder 10, dadurch gekennzeichnet, daß die starren Ringe und die Verstrebungen aus Beryllium sind.

## Claims

1. Aerodynamic braking device, intended in particular for decelerating a space object penetrating an atmosphere at high speed, constituted by a canvas ring of almost truncated-conical shape and by a supporting structure designed to retain the said canvas ring under tension, characterized in that the canvas (2) is arranged with threads in an almost axial direction and threads in an almost equatorial direction, and in that the said canvas ring exhibits a concavity directed radially away from the axis, and in that the supporting structure comprises at least two rigid rings (6, 7), acting on the largest and smallest diameter portions of the canvas ring and connected between them by rigid struts (8) which exert on the said rigid rings an axial force tending to separate them, so that, because of the concavity of the canvas ring, the said canvas is subjected, between the said rigid rings, to a biaxial tension along the axial and equatorial directions.

2. Device according to claim 1, characterized in that the edges of the canvas ring are provided with boltropes (3, 4) which are each held in a groove (10, 16) of the corresponding rigid ring, which groove is positioned in such a way that the inner face of the canvas ring bears on the rigid ring.

3. Device according to claim 2, characterized in that insulating wedges (19) are inserted in each case between the inner face of the canvas and the adjacent rigid ring.

4. Device according to claim 2 or 3, characterized in that the groove of the said larger rigid ring is carried by a member (15) independent of the rest of the ring, and capable of sliding on it along a cylindrical surface (14) parallel to the axis of the device.

5. Device according to anyone of claims 2 to 4, characterized in that the boltropes (3, 4) are retained in their groove by annular locking members (11, 17).

6. Device according to anyone of claims 1 to 5, characterized in that the shape and the arrangement of the struts (8) are calculated in order that, when in use, the canvas does not come into contact with the said struts.

7. Device according to anyone of claims 1 to 6, characterized in that the coefficient of expansion of the canvas is lower than that of the material of the rigid rings and of the struts, and the tension of the canvas is calculated in order that, when in use, the differences of expansion engender an increase in the tension of the canvas which brings this tension to the desired value.

8. Device according to anyone of claims 1 to 7, characterized in that the canvas ring is woven in a single member.

9. Device according to anyone of claims 1 to 8, characterized in that the material of the canvas and that of the rigid rings and of the struts are chosen in order that the canvas can withstand high temperatures and that the rigid rings and the struts rapidly diffuse heat from the points of contact of the canvas with the rigid rings so as to avoid a local overheating of the rings in the vicinity of these points of contact.

10. Device according to claim 9, in which the canvas is made from carbon fabric.

11. Device according to claim 9 or 10, characterized in that the canvas is made from carbon fabric and the rigid rings and struts are made from beryllium.
